## Europäisches Patentamt

## European Patent Office

## Office européen des brevets

(11) Veröffentlichungsnummer: **0 212 461**
**B1**

# EUROPÄISCHE PATENTSCHRIFT

(45) Veröffentlichungstag der Patentschrift:
02.11.88

(51) Int. Cl.⁴: **B 60 B 13/00, F 16 F 15/32**

(21) Anmeldenummer: 86110907.2

(22) Anmeldetag: 07.08.86

(54) **Luftbereiftes Fahrzeugrad mit Ausgleichsgewicht.**

(30) Priorität: 17.08.85 DE 3529510

(43) Veröffentlichungstag der Anmeldung:
04.03.87 Patentblatt 87/10

(45) Bekanntmachung des Hinweises auf die Patenterteilung:
02.11.88 Patentblatt 88/44

(84) Benannte Vertragsstaaten:
AT BE CH DE FR GB IT LI LU NL SE

(56) Entgegenhaltungen:
EP-A-0 110 023
EP-A-0 139 905
US-A-2 265 076

PATENTS ABSTRACTS OF JAPAN, Band 9, Nr. 198
(M-404) 1921 , 15. August 1985; & JP-A-60 61 301
(HONDA GIKEN KOGYO K.K.) 09-04-1985

(73) Patentinhaber: **Continental Aktiengesellschaft,
Königsworther Platz 1, D-3000 Hannover 1 (DE)**

(72) Erfinder: **Flebbe, Werner, Albert- Schweitzer-
Strasse 52, D-3057 Neustadt a. Rbg. (DE)**

**Beschreibung**

Die Erfindung betrifft ein luftbereiftes Fahrzeugrad mit Ausgleichsgewicht, mit einer starren Felge, die im wesentlichen sich nach radial innen erstreckende Felgenhörner aufweist, und mit einem Fahrzeugluftreifen, der mit seinen Wülsten auf der radial inneren Seite der Felge neben den Felgenhörnern befestigt ist, weiterhin mit je einem Abdeckring, der den Raum axial innen von jedem Reifenwulst ausfüllt, wobei zum Heltens des Ausgleichgewichts ein Befestigungselement dient, das in eine Nüt eingreift.

Ein solches Fahrzeugrad wird z. B. in der DE-OS-3 312 482 beschrieben. Bei dem bekannten Fahrzeugrad wird ein Ausgleichsgewicht in der Weise befestigt, daß sein Verankerungselement in den Schlitz zwischen Reifenwulst und Abdeckring eingetrieben wird. Dies kann jedoch dazu führen, daß in der Nachbarschaft des Verankerungselementes der Gummi des Reifenwulstes oder des Abdeckrings so stark verformt wird, daß Wasser und/oder Schmutz in den Schlitz eindringen kann und unter Umständen bis zum Felgenkranz vordringen kann.

Der Erfindung liegt deshalb die Aufgabe zugrunde, ein Fahrzeugrad mit Ausgleichsgewicht der eingangs genannten Art anzugeben, bei dem die Dichtfunktion des Abdeckrings voll erhalten bleibt.

Diese Aufgabe wird erfindungsgemäß dadurch gelöst, daß ein zum Halten. des Ausgleichsgewichts dienendes Befestigungselement in eine Nut des Abdeckrings eingreift, deren Grund noch innerhalb des Abdeckrings liegt.

Der erfindungsgemäße Gedanke besteht im wesentlichen darin, die Nut bzw. den Schlitz zum Eintreiben des Befestigungselementes des Ausgleichsgewichts vom Grenzbereich Abdeckring / Reifenwulst in das Innere des Abdeckrings zu verlagern und weiterhin die Tiefe der Nut so zu wählen, daß sie noch im Inneren des Abdeckrings endet. Bei einer solchen Ausgestaltung erzielt man den Vorteil, daß selbst im Falle eines Eindringens von Wasser in der Nachbarschaft des Befestigungselements kein Schaden entstehen kann, weil das Wasser nicht bis zum Felgenkranz vordringen kann.

Gemäß einer vorteilhaften Ausgestaltung der Erfindung befindet sich die Nut zum Befestigen des Ausgleichsgewichts möglichst weit axial außen am Abdeckring, ohne jedoch den axial äußeren Rand zu berühren. Weiterhin ist es zweckmäßig, das Befestigungselement winkelig auszubilden und so anzuordnen, daß der eine Winkel mit dem Ausgleichsgewicht sich auf Höhe des Reifenwulstes befindet.

Vorteilhafte Ausgestaltungen der Erfindung sind den Unteransprüchen zu entnehmen.

Nachfolgend wird ein Ausführungsbeispiel der Erfindung anhand einer Zeichnung erläutert.
Es zeigt

Fig. 1 ein Fahrzeugrad mit einem Ausgleichsgewicht in einem radialen Teilschnitt,
Fig. 2 ein Ausgleichsgewicht mit einer Steckklammer in einer perspektivischen Ansicht.

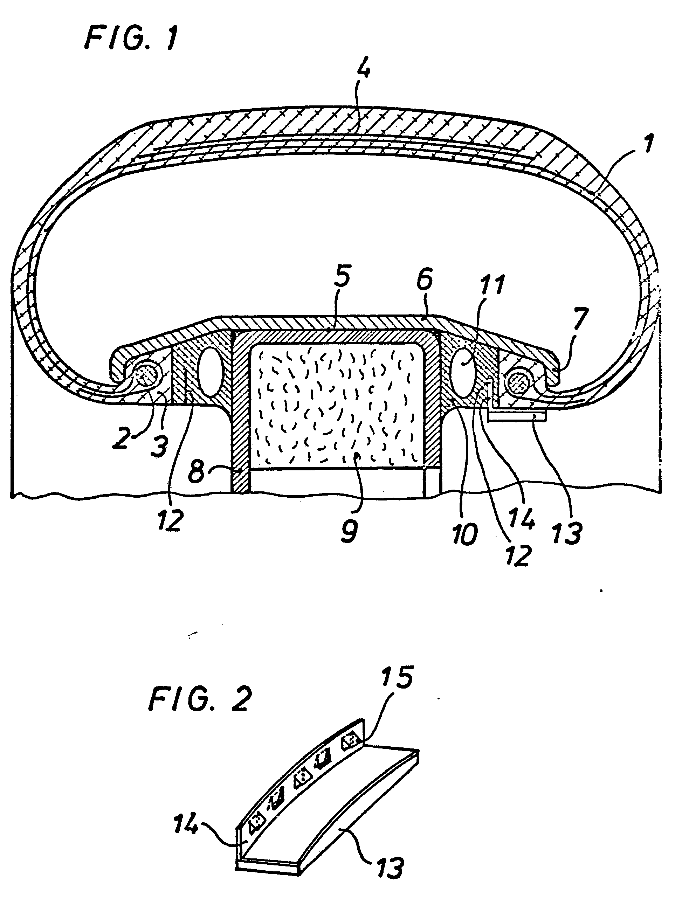

Beim Fahrzeugrad der Fig. 1 ist ein Gürtelreifen mit einer Radialkarkasse 1, die mit ihren Enden durch Umschlingen der Wulstkerne 2 in den Wülsten 3 verankert ist,und mit einem üblichen Gürtel 4 derart auf einer Felge 5 montiert, daß die Wulstsitzflächen sich auf radial innen vom Felgenkranz 6 gelegenen Sitzflächen neben den nach radial innen sich erstreckenden Felgenhörnern 7 befinden. Der Felgenkranz 6 ist an einer Felgenschüssel 8 befestigt, die in ihrem radial äußeren Bereich im Schnitt U-förmig verläuft. Zur Verhinderung des Eindringens von Schmutz und Regenwasser ist der U-förmige Bereich von einem Schaumring 9 ausgefüllt. Die Räume zwischen den beiden Reifenwülsten 3, dem Felgenkranz 6 und der Felgenschüssel 8 werden von je einem Abdeckring 10 aus Gummi eingenommen, der zur Gewichtseinsparung Hohlräume 11 aufweisen kann.

In jedem Abdeckring 10 befindet sich eine umlaufende, nach radial innen geöffnete Nut 12, die so schmal sein kann, daß sie im Grenzfall in einen Schlitz übergeht. Die Nut 12 sollte sich möglichst weit axial außen im Abdeckring 10 befinden, ohne jedoch den am Reifenwulst 3 angrenzenden Rand des Abdeckrings 10 zu berühren. Die Nut 12 dient zum Befestigen eines Ausgleichsgewichts 13, das z. B. mit Hilfe einer winkeligen Steckklammer 14 gehalten wird. Dabei kann das Ausgleichsgewicht 13 ober- oder unterhalb des einen Schenkels der Steckklammer 14 auf Höhe des Reifenwulstes 3 liegen. Die Tiefe der Nut 12 ist so zu wählen, daß die Steckklammer sicher verankert werden kann. Es haben sich Tiefen bewährt, die etwa der halben Abdeckringdicke entsprechen. Bei Bedarf können selbstverständlich auch Klammern zum Einsatz kommen, die durch Klebung verankert werden. Es sollte darauf hingewiesen werden, daß bei Bedarf statt einer umlaufenden Nut 12 selbstverständlich auch einzelne Nutabschnitte auf dem Umfang des Abdeckrings 10 vorgesehen sein können.

Im Grenzfall können diese einzelnen Nutabschnitte in regelmäßig über den Umfang verteilte Löcher übergehen. Auch diese aufgezeigten und ähnliche Varianten sollen im Rahmen dieser Erfindung unter dem Begriff "Nut" verstanden werden.

In Fig. 2 ist beispielhaft ein an sich bekanntes Ausgleichsgewicht 13 mit einer winkeligen Steckklammer 14 dargestellt. Im freien Schenkel der Steckklammer 14 befinden sich teilausgestanzte Lappen 15, die seitlich herausgebogen sind, so daß sie nach der Montage des Ausgleichsgewichts 13 dieses durch Klammerung im Abdeckring 10 halten. Statt der Steckklammer 14 können selbstverständlich auch Stifte mit dübelähnlichen Verankerungselementen zum Einsatz kommen.

**Patentansprüche**

1. Luftbereiftes Fahrzeugrad mit Ausgleichsgewich (13), mit einer starren Felge (5),die im wesentlichen sich nach radial innen erstreckende Felgenhörner (7) aufweist, und mit einem Fahrzeugluftreifen, der mit seinen Wülsten (3) auf der radial inneren Seite der Felge neben den Felgenhörnern befestigt ist, weiterhin mit je einem Abdeckring (10), der den Raum axial innen von jedem Reifenwulst ausfüllt wobei zum Halten des Augleichsgewichts (13) ein Befestigungselement (14) dient, das in eine Nut (12), eingreif, dadurch gekennzeichnet, daß die Nut (12) im Abdeckring (10) und deren Grund noch innerhalb des Abdeckrings (10) liegt.

2. Fahrzeugrad nach Anspruch 1, dadurch gekennzeichnet, daß die Nut (12) sich möglichst weit axial außen am Abdeckring (10) befindet, ohne jedoch den axial äußeren Rand zu berühren.

3. Fahrzeugrad nach Anspruch 1, dadurch gekennzeichnet, daß die Nut (12) in Form eines Schlitzes vorliegt.

4. Fahrzeugrad nach Anspruch 1, gekennzeichnet durch eine umlaufende Nut (12).

5. Fahrzeugrad nach Anspruch 1, dadurch gekennzeichnet, daß die Tiefe der Nut (12) etwa 50 % der Abdeckringdicke beträgt.

6. Fahrzeugrad nach Anspruch 1, dadurch gekennzeichnet, daß das Befestigungselement aus einer Steckklammer (14) besteht.

7. Fahrzeugrad nach Anspruch 1, dadurch gekennzeichnet, daß das Befestigungselement (14) abgewinkelt ist und daß sich das daran befestigte Ausgleichsgewicht (13) auf Höhe des Reifenwulstes (3) befindet.

**Claims**

1. Vehicle wheel provided with a pneumatic tyre and a wheelbalancing weight (13), having a rigid rim (5), which is provided with rim flanges (7) extending substantially radially inwardly, and having a pneumatic vehicle tyre, which is secured by its beads (3) on the radially inner surface of the rim adjacent the rim flanges, as well as additionally having a respective cover ring (10) which fills the space axially internally of each tyre bead, a securing element (14) serving to retain the wheel-balancing weight (13) and engaging in a groove (12), characterised in that the groove (12) is situated in the cover ring (10) and its base is also situated inside the cover ring (10).

2. Vehicle wheel according to claim 1, characterised in that the groove (12) is situated in the cover ring (10) as far as axially externally possible, but without touching the axially outer edge.

3. Vehicle wheel according to claim 1, characterised in that the groove (12) is in the form of a slot.

4. Vehicle wheel according to claim 1, characterised by a circumferential groove (12).

5. Vehicle wheel according to claim 1, characterised in that the depth of the groove (12) is approximately 50 % of the cover ring thickness.

6. Vehicle wheel according to claim 1, characterised in that the securing element is an insert clamp (14).

7. Vehicle wheel according to claim 1, characterised in that the securing element (14) is bent-over, and in that the wheel-balancing weight (13) secured thereto is situated on a level with the tyre bead (3).

**Revendications**

1. Roue de véhicule à pneumatique, comportant un poids d'équilibrage (13), une jante rigide (5), qui est pourvue de rebords (7) s'étendant sensiblement radialement vers l'intérieur, ainsi qu'un pneumatique qui est fixé par ses talons (3) sur le côté radialement intérieur de la jante à côté des rebords de cette dernière, et en outre respectivement un anneau de recouvrement (10), qui remplit le volume existant axialement à l'intérieur de chaque talon du pneumatique, la retenue du poids d'équilibrage (13) étant assurée par un élément de fixation (14) qui est accroché dans une rainure (12), caractérisée en ce que la rainure (12) est située dans l'anneau de recouvrement (10) et son fond est placé encore à l'intérieur de l'anneau de recouvrement (10).

2. Roue de véhicule selon la revendication 1, caractérisée en ce que la rainure (12) est située aussi loin que possible axialement vers l'extérieur sur l'anneau de recouvrement (10), sans cependant toucher le bord axialement extérieur.

3. Roue de véhicule selon la revendication 1, caractérisée en ce que la rainure (12) est prévue sous la forme d'une fente.

4. Roue de véhicule selon la revendication 1, caractérisée par une rainure périphérique (12).

5. Roue de véhicule selon la revendication 1, caractérisée en ce que la profondeur de la rainure (12) s'élève à environ 50 % de l'épaisseur de l'anneau de recouvrement.

6. Roue de véhicule selon la revendication 1, caractérisée en ce que l'élément de fixation se compose d'une agrafe emboîtable (14).

7. Roue de véhicule selon la revendication 1, caractérisée en ce que l'élément de fixation (14) est coudé et en ce que le poids d'équilibrage (13) fixé sur celui-ci est situé à la hauteur du talon (3) du pneumatique.

FIG. 1

FIG. 2